# EUROPEAN PATENT APPLICATION

(11) **EP 4 394 205 A1**
(43) Date of publication of application: **03.07.2024**
(21) Application number: 23218251.9
(22) Date of filing: 19.12.2023
(51) Int. Cl.: F16F 15/08, F24F 1/60, F24F 13/32

(54) **ANTI-VIBRATION MOUNT FOR THE EXTERNAL UNITS OF AIR-CONDITIONING EQUIPMENT**

(30) Priority: 23.12.2022 IT 202200005334 U
(71) Applicant: Niccons Italy SRL, 36100 Vicenza (IT)
(72) Inventor: PIGNOLO, Nicola, 36100 VICENZA (IT)
(74) Representative: Bonini, Ercole

(57) **Abstract**

The invention is an anti-vibration mount (1) for the external units of air-conditioning equipment, comprising:
- a base (9) made of recycled rubber;
- a section bar (2) immersed in the base (9) and emerging at the top of the base, suited to house fixing screws (30) intended to fix the external unit of air-conditioning equipment.

The section bar (2) is made of a rigid plastic material.

## Description

The present invention concerns an anti-vibration mount for the external units of air-conditioning equipment, wherein said air-conditioning equipment is placed outside buildings and generally rested on flat surfaces.

According to the known technique, said air-conditioning equipment is generally placed on the floor and is supported by anti-vibration rubber feet, wherein the feet are provided with nuts at their centre to connect the feet to the lower part of the air conditioner.

Supporting brackets are also known, which consist of a section element generally made of a plastic material, in the upper central part of which there is an aluminium section bar suited to ensure that the air conditioner is supported and to house the fixing screws of the air conditioner itself.

According to the known art, since the section bar is generally made of aluminium, over time the screws that connect the air conditioner to the aluminium section bar generate oxide, which is highly corrosive and causes the anti-vibration mount itself to deteriorate.

The present invention intends to overcome the drawback just described above, that is, to prevent the generation of oxide between the anti-vibration mount and the screws connecting the air conditioners to said mount and, consequently, the deterioration of the mount itself.

The set object is achieved by providing an anti-vibration mount which, in accordance with the main claim, is provided with a section bar for connection to the external unit that is made of plastic instead of aluminium.

Further characteristics and details of the invention are highlighted in the following description, wherein:
- Fig. 1 shows the anti-vibration mount as a whole;
- Fig. 2 shows the anti-vibration mount separated from the section bar used to fix the air conditioner;
- Fig. 3 shows a top view of said anti-vibration mount;
- Fig. 4 shows a sectional view according to line IV-IV of Fig. 3;
- Fig. 5 shows a perspective view of an element of the anti-vibration mount of Fig. 1;
- Fig. 6 shows a bottom view of the element of Fig. 1.

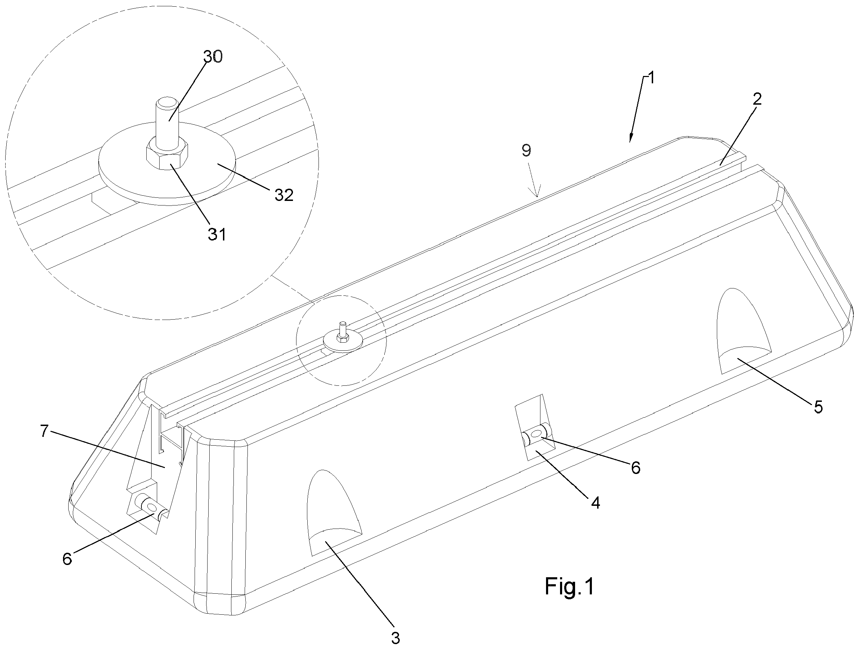

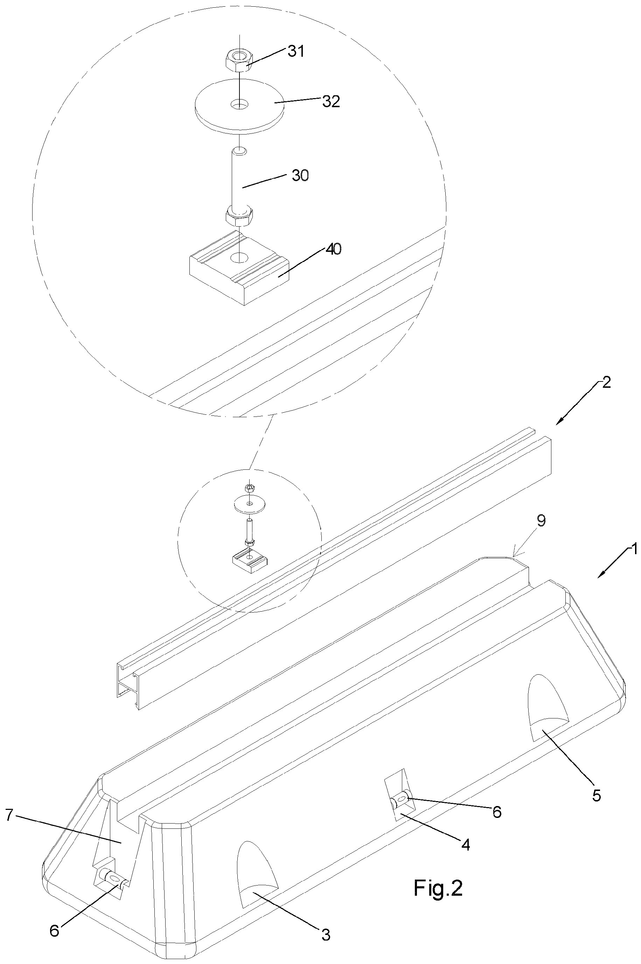

The anti-vibration mount of the external unit of air-conditioners is indicated as a whole by **1** in Fig. 1; said mount comprises a base **9** with predominantly trapezoidal cross section and on its upper part is provided with a section bar indicated by **2,** which is better visible in Fig. 2.

The base **9** is generally made of recycled rubber powder obtained from the processing of discarded tyres, which makes its top sufficiently rigid to support the weight of the air conditioner that will be connected to the mount.

On both the long sides of the base **9** there are lightening elements indicated by **3, 4** and **5.**

On both sides of the central lightening element **4** there is a spirit level indicated by **6.**

Even on the two opposite short sides of the base **9** there are spirit levels **6** that are housed in the recess **7,** as can be seen in Figures 1 and 2.

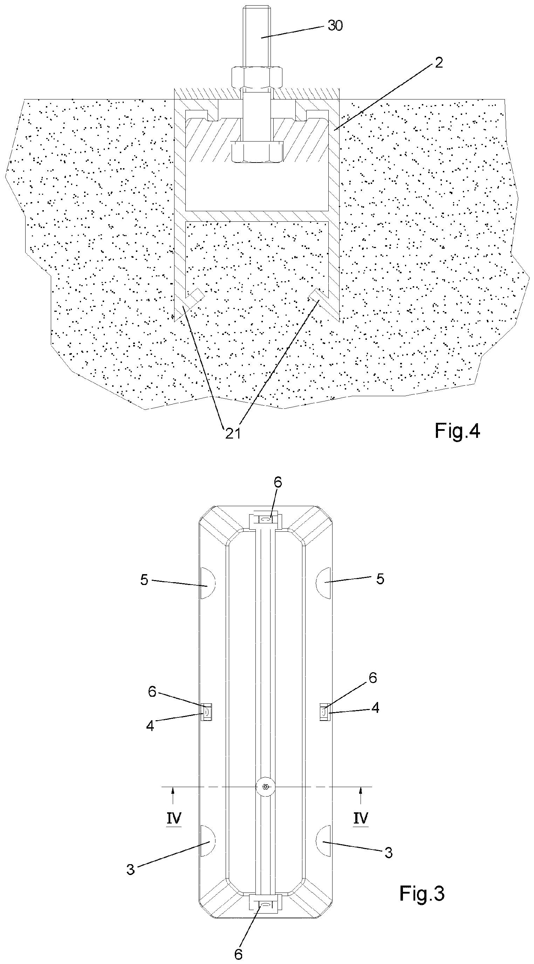

In order to avoid the drawbacks of the prior art, which are due to the presence of an aluminium section bar in the upper part, the section bar **2** is now made of rigid PVC, preferably but not necessarily reinforced with fiberglass, as can be seen in Figures 2 and 4.

The cross section of the section bar is clearly visible in Fig. 4 and, as can be seen, its configuration ensures that the section bar itself is firmly buried into the base **9** also thanks to the presence of hooks **21** that prevent the section bar **2** from moving with respect to the anti-vibration mount.

The lane on which the section bar **2** develops is provided with several screws **30** (only one screw is shown in the drawing), whose thread makes it possible to connect the external air-conditioning unit to said section bar **2,** and thus to the entire anti-vibration mount **1.**

The plurality of screws **30** is anchored to the section bar **2** by means of a block **40,** said block **40** is positioned inside the section bar and houses the head of the screw **30** that rests on the upper part of the section bar.

The screw is permanently secured in its position by means of the nut **31,** which rests on the plate **32.**

Obviously, before fixing each screw **30,** the screws must be placed in a position corresponding to that of the threaded holes provided in the air-conditioner.

Once positioned as specified above, the screw **30** can be tightened and fixed as already described.

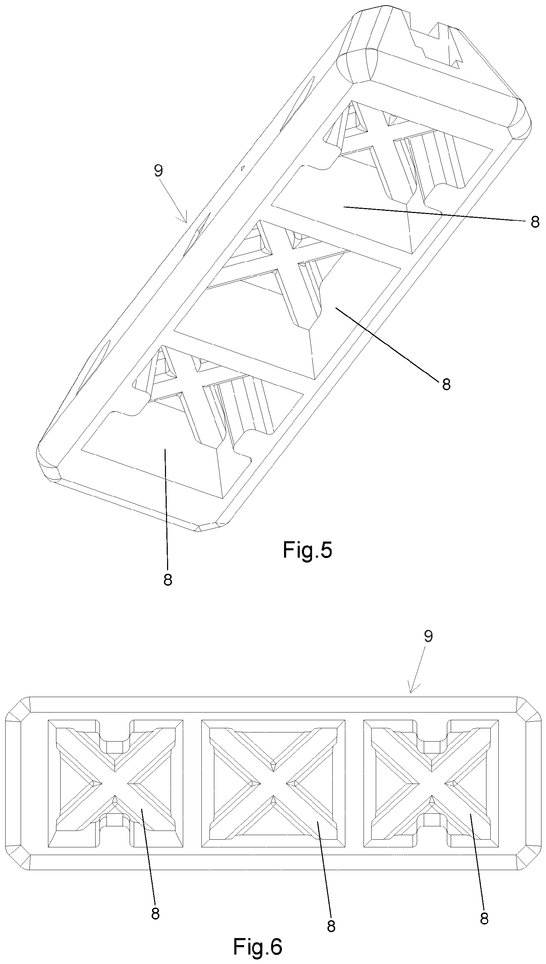

In order to make the anti-vibration mount **1** lighter and more economical, three lightening elements have been provided in the lower part of the base **9,** which are indicated by **8** and clearly visible in Figures 5 and 6.

In this way, the anti-vibration mount still retains all its functional characteristics. From what has been described it is clear that the use of the section bar made of rigid PVC, whether or not reinforced with fiberglass, allows neither the plate **32** nor the screw **30** to deposit oxides over time, which would damage the section bar itself and, in the long term, the tightness of the external air-conditioning unit.

The object of the invention, which is precisely to avoid the drawbacks of the prior art, has thus been achieved.

## Claims

1. Anti-vibration mount (1) for the external units of air-conditioning equipment, comprising:
- a base (9), preferably made of recycled rubber;
- a section bar (2) immersed in said base (9) and emerging at the top of said base, suited to house fixing screws (30) intended to fix said external unit of air-conditioning equipment,
**characterized in that** said section bar (2) is made of a rigid plastic material.

2. Anti-vibration mount (1) according to claim 1, **characterized in that** said rigid plastic of said section bar (2) is made of rigid PVC.

3. Anti-vibration mount (1) according to claim 1 or 2, **characterized in that** said rigid plastic of said section bar (2) is made of PVC reinforced with fibreglass.

4. Anti-vibration mount (1) according to any of claims from 1 to 3, **characterized in that** lightening elements (3, 4, 5) are provided on the long sides and a recess (7) is provided on each of the short sides of said base (9).

5. Anti-vibration mount (1) according to claim 4, **characterized in that** on each side of said base (9) there is a spirit level (6) positioned at the centre.

6. Anti-vibration mount (1) according to claim 4, **characterized in that** it is provided with three lightening elements (8) in the lower part of said base (9).
